# EUROPÄISCHE PATENTSCHRIFT

(11) **EP 0 472 764 B1**
(45) Veröffentlichungstag und Bekanntmachung des Hinweises auf die Patenterteilung: **06.03.1996**
(21) Anmeldenummer: 90116639.7
(22) Anmeldetag: 30.08.1990
(51) Int. Cl.: H04N 9/64

(54) **Verfahren zur Reduktion des Farbrauschens eines Fernsehsignals**
Method for reducing colour noise of a television signal
Procédé de réduction du bruit d'un signal de télévision couleur

(43) Veröffentlichungstag der Anmeldung: 04.03.1992
(73) Patentinhaber: Deutsche ITT Industries GmbH, D-79108 Freiburg (DE)
(72) Erfinder: Désor, Hans-Jürgen, Dipl.-Ing., D-7803 Gundelfingen 2 (DE)

(56) Entgegenhaltungen:
- EP-A- 0 194 759
- US-A- 4 926 361

## Beschreibung

Die Erfindung betrifft ein Verfahren zur Reduktion des Farbrauschens der Chrominanzsignale eines Fernsehbildes mittels eines vertikalen Digitalfilters, bei dem aus dem Chrominanzsignal einer jeden Zeile, dessen Farbanteil ein stochastisch spektralverteilter Rauschanteil überlagert ist, und aus einem aus den Chrominanzsignalen der vertikal vorangehenden Zeilen gewonnenen rauschreduzierten Referenz-Chrominanzsignal ein Differenzsignal abgeleitet wird, dessen Frequenz und Amplitude durch den Rauschanteil dieser Zeile und durch die Korrelation des Farbanteils dieser Zeile mit den Farbanteilen der vertikal vorangehenden Zeilen bestimmt wird, und bei dem die Ableitung des in die Berechnung des Differenzsignals der vertikal darauffolgenden Zeile eingehenden rauschreduzierten Referenz-Chrominanzsignal durch rekursive Signalverarbeitungsoperationen des Digitalfilters erfolgt, indem dieses rauschreduzierte Referenz-Chrominanzsignal aus dem mit einem ersten Korrekturfaktor bewerteten Differenzsignal und aus dem Chrominanzsignal dieser Zeile gebildet wird, und bei dem die Reduktion des Rauschanteils des Chrominanzsignals dieser Zeile durch transversale Signalverarbeitungsoperationen erfolgt, indem durch die Subtraktion des mit einem zweiten Korrekturfaktor bewerteten Differenzsignals von dem Chrominanzsignal dieser Zeile ein rauschreduzierte Chrominanzsignal gebildet wird, sowie eine Vorrichtung zur Durchführung des Verfahrens.

Ein derartiges Verfahren sowie eine Vorrichtung zur Durchführung dieses Verfahrens sind bekannt. Die allgemein unter dem Namen HQ-Filter (HQ = High Quality) bekannte Vorrichtung stellt ein vertikales Tiefpaßfilter dar, in dem der Rauschanteil einer jeden Zeile des Fernsehbildes gegenüber dem gemittelten und dadurch rauschbefreitem Zeileninhalt des aus mehreren vertikal vorangehenden Zeilen gewonnenen Referenz-Chrominanzsignals herausgefiltert wird. Das bekannte Verfahren funktioniert einigermaßen zufriedenstellend bei gut korrelierten Chrominanzsignalen vertikal aufeinanderfolgender Zeilen: In diesem Fall wird die Frequenz und die Amplitude des aus dem Chrominanzsignal der Zeile und aus dem Referenz-Chrominanzsignal der vertikal vorangehenden Zeilen gebildete Differenzsignal im wesentlichen durch den Rauschanteil der zu verarbeitenden Zeile bestimmt. Das Differenzsignal besitzt einen niederfrequenten Charakter und weist nur eine kleine Amplitude auf, so daß dieses Signal ohne Modifikationen in die rekursiven Signalverarbeitungsoperationen zur Gewinnung des Referenz-Chrominanzsignals für die vertikal folgende Zeile und in die transversalen Signalverarbeitungsoperationen zur Reduktion des Farbrauschens der zu verarbeitenden Zeile ohne jedwede Modifikationen eingehen kann.

Aus US-A-4 926 361 ist eine weitere Rauschbefreiungsschaltung für digitale Farbfernsehsignale bekannt, in der das durch Differenzbildung bestimmte Rauschsignal vor der weiteren Verarbeiung über einen Begrenzer geführt wird, der bei hohen Rauschamplituden, die auch von Farbsignalsprüngen herrühren können, die Wirkung des Rauschfilters reduziert. Die Bestimmung der jeweiligen Rauschbezugsgröße erfolgt innerhalb des jeweiligen Halbbildes, indem in vertikaler Richtung die Korrelation der Farbsignale zwischen den Zeilen des Videosignals ausgewertet wird. Hierzu wird bildpunktweise die Differenz aus den Farbsignalen der aktuellen und der vorangehenden Zeile in einem Subtrahierer gebildet, wobei dieser Wert noch mittels eines Limiters mit nichtlinearer Kennlinie in seiner Wirkung für die weitere Signalverarbeitung modifiziert wird.

Das bekannte Verfahren besitzt jedoch den Nachteil, daß es nur zu unbefriedigenden Resultaten führt, wenn die Chrominanzsignale vertikal aufeinanderfolgender Zeilen nicht entsprechend korreliert sind. Dies ist stets dann der Fall, wenn im Fernsehbild Farbsprünge zwischen zwei dicht aufeinanderfolgenden Zeilen auftreten: In diesem Fall enthält das Differenzsignal außer dem Rauschanteil der Zeile auch noch hochfrequente Anteile mit großer Signalamplitude, welche aus diesem Farbsprung resultieren. Ein derartiges hochfrequentes Differenzsignal mit großer Signalamplitude darf jedoch nicht in die rekursive Filterung eingehen, da ansonsten eine Verschleifung von Farbsprüngen auftritt. Dieser als "colour-hanging" bekannte Effekt führt bei der bekannten Vorrichtung in besonders nachteiliger Art und Weise zu einer Verschlechterung der Farbtreue des Fernsehbildes, da das in die rekursive Signalverarbeitungsoperationen eingehende Differenzsignal zu einem Referenz-Chrominanzsignal führt, welches nun nicht mehr im wesentlichen durch den zu eliminierenden Rauschanteil bestimmt wird. Vielmehr wird das Referenz-Chrominanzsignal durch den in den vertikal vorangehenden Zeilen aufgetretenen Farbsprung bestimmt. Dies bewirkt in besonders nachteiliger Art und Weise, daß in diesem Fall eine effiziente Reduktion bzw. Elimination des Farbrauschens nicht mehr möglich ist.

Die zur Durchführung des Verfahrens eingesetzte analoge Schaltungs-Vorrichtung besitzt darüber hinaus den Nachteil, daß zur Verarbeitung von PAL-Farbfernsehsignalen eine besonders teuere und aufwendige Ausgestaltung erforderlich ist. Die zeilenweise alternierende Phase der (R-Y)-Komponente eines PAL-Chrominanzsignals bringt mit sich, daß bei den bekannten HQ-Filtern zwei Verzögerungsleitungen erforderlich sind. Eine derartige Verzögerungsleitung stellt aber ein besonders teures Bauelement dar, so daß in besonders nachteiliger Art und Weise die bekannten Vorrichtungen nur mit relativ hohen Kosten zu realisieren sind.

Ein weiterer Nachteil der bekannten Vorrichtung besteht darin, daß mit ihr spezielle Farbstörungen nicht korrigierbar sind, die bei einigen Betriebsarten eines Videorecorders im Fernsehbild auftreten: Bei der Aufzeichnung von Farbfernsehsignalen sind die Zeilen eines Halbbildes von Spur zu Spur gegeneinander versetzt auf dem Videoband. Bei einigen Wiedergabearten - z.B. Suchlauf - läuft der Videokopf schräg über die Spuren, so daß im gelesenen Videosignal halbzeilige Sprünge sowie Vorzeichenfehler der (R-Y)-Komponente des PAL-Chrominanzsignals auftreten können.

Zur Korrektur derartiger Störungen im Fernsehbild wird bis jetzt eine speziell für diesen Zweck konzipierte Schaltung eingesetzt. Dies bringt in besonders nachteiliger Art und Weise erhöhte Herstellungskosten des Videorecorders mit sich, da in diesem sowohl eine Schaltung zur Korrektur des Farbrauschens als auch eine weitere Schaltung zur Elimination der eben genannten Farbstörungen vorhanden sein müssen.

Zur Vermeidung dieser Nachteile stellt sich die Erfindung die Aufgabe, ein Verfahren sowie eine Vorrichtung der eingangs genannten Art derart weiterzubilden, daß bei vertikal unkorrelierten Chrominanzsignalen keine Verschleifung von Farbsprüngen auftritt. Die erfindungsgemäße Vorrichtung soll dabei derart ausgebildet werden, daß mit nur einem verhältnismäßig geringen hardwaremäßigen Mehraufwand auch die Korrektur von halbzeiligen Sprüngen und von Phasenfehlern eines PAL-Farbfernsehsignals durchführbar ist.

Diese Aufgabe wird von dem erfindungsgemäßen Verfahren durch die im Kennzeichen des Anspruchs 1 enthaltenen Merkmale gelöst.

Erfindungsgemäß ist also vorgesehen, daß mittels digitaler Signalverarbeitung das Differenzsignal bei den rekursiven und den transversalen Signalverarbeitungsoperationen einem des Digitalfilters über einen Limiter geführt wird, dessen Übertragungsfunktion derart festgelegt ist, daß kleine Differenzsignale unverändert durchgelassen werden, große Differenzsignale jedoch unterdrückt werden, wobei in einem Zwischenbereich ein Übergang stattfindet: Bei einem unkorrelierte Chrominanzsignale vertikal aufeinanderfolgender Zeilen repräsentierenden Differenzsignal erfolgt also eine amplitudenabhängige Dämpfung desselben. Ein korrelierte Chrominanzsignale vertikal aufeinanderfolgender Zeilen repräsentierendes Differenzsignal wird ungedämpft übertragen. Das derart gewonnene modifizierte Differenzsignal geht anstelle des ursprünglichen Differenzsignals in die rekursiven und in die transversalen Signalverarbeitungsoperationen ein.

Das erfindungsgemäße Verfahren besitzt den Vorteil, daß eine effektive Reduktion bzw. Elimination des Farbrauschens der Chrominanzsignale eines Fernsehbildes auch bei nicht oder nur schlecht korrelierten Chrominanzsignalen vertikal aufeinanderfolgender Zeilen ermöglicht wird. Die erfindungsgemäßen Maßnahmen bewirken, daß keine Verschleifung von Farbsprüngen, also kein "colour-hanging" mehr auftritt: Bei einem hochfrequenten Differenzsignal mit großen Signalamplituden erfolgt - abhängig von der Amplitude des Differenzsignals - eine Dämpfung desselben, so daß das in die rekursiven Signalverarbeitungsoperationen eingehende modifizierte Differenzsignal das Referenz-Chrominanzsignal nicht mehr in nachteiliger Art und Weise beeinflussen kann.

Das Referenz-Chrominanzsignal bleibt im wesentlichen unverändert, wodurch die einwandfreie Funktionsweise des erfindungsgemäßen Verfahrens zur Reduktion des Farbrauschens auch bei unkorrelierten Chrominanzsignalen vertikal aufeinanderfolgender Zeilen gewährleistet ist. Dies bewirkt in besonders vorteilhafter Art und Weise eine drastische Verbesserung bei der Farbwiedergabe eines Fernsehbildes.

Dieses Verfahren wird erfindungsgemäß in einer bevorzugten Vorrichtung durchgeführt, bei der in besonders vorteilhafter Art und Weise vorgesehen ist, daß ein Eingang des Digitalfilters mit einem Minuend-Eingang eines Subtrahierers verbunden ist, und daß ein Subtrahend-Eingang des Subtrahierers wahlweise mit einem zweiten Register und wahlweise mit den Ausgängen einer Verzögerungseinrichtung verbindbar ist, wobei die Länge der Verzögerungseinrichtung eine Zeile des Fernsehbildes beträgt, und daß ein Ausgang des Subtrahierers mit dem Eingang eines Limiters verbunden ist, und daß der Ausgang des Limiters mit einem ersten Register verbunden ist, dessen Ausgang mit dem Eingang der Verzögerungseinrichtung, mit einem Eingang eines Multiplizierers und mit einem Eingang eines dritten Registers verbunden ist, und daß der Ausgang des Multiplizierers mit dem Eingang des zweiten Registers verbunden ist, und daß ein Multiplikator-Eingang des Multiplizierers über einen Schalter wahlweise mit einem ersten und mit einem zweiten Speicherregister verbindbar ist, in denen der erste Korrekturfaktor, der zweite Korrekturfaktor und die beiden Werte der Korrekturkonstanten speicherbar sind.

Diese erfindungsgemäße bevorzugte Vorrichtung zeichnet sich gegenüber der zum Stand der Technik gehörenden Vorrichtung durch ihren besonders einfachen hardwaremäßigen Aufbau aus. Bei der bekannten Vorrichtung sind zwei Multiplizierer, drei Subtrahierer und sechs Register nötig. Die oben beschriebene bevorzugte Vorrichtung erlaubt es nun, das erfindungsgemäße Verfahren mit nur einem Multiplizierer, einem Subtrahierer und drei Registern auszuführen. Dieser beträchtliche Minderaufwand an Bauelementen verbilligt die Herstellungskosten beträchtlich.

Eine vorteilhafte Weiterbildung der Erfindung sieht vor, daß ein erster und ein zweiter Invertierer vorgesehen sind, die dem erfindungsgemäßen Digitalfilter (HQ-Filter) vor- bzw. nachgeschaltet sind. Eine derartige Anordnung der beiden Invertierer besitzt eine Reihe von Vorteilen: Zum ersten ist es besonders einfach möglich, sowohl NTSC-Farbfernsehsignale als auch PAL-Farbfernsehsignale in ein und demselben Digitalfilter zu verarbeiten: Bei NTSC-Signalen kann die Filterung ohne Modifikation der (R-Y)-Komponente und der (B-Y)-Komponente der Basisbandsignale des Chrominanzsignals erfolgen. Bei PAL-Farbfernsehsignalen, deren (R-Y)-Komponente eine zeilenweise alternierende Phasenlage aufweist, ist erfindungsgemäß vorgesehen, daß diese Komponente des Basisbandes in jeder zweiten Zeile der vertikal aufeinanderfolgenden Zeilen invertiert wird. Dies besitzt den Vorteil, daß das dem ersten Invertierer nachgeschaltete Digitalfilter unabhängig von der (Phasen-)Norm der zu verarbeitenden Farbfernsehsignale ausgelegt werden kann. Die im ersten Invertierer vollzogene Korrektur der zeilenweise alternierenden (R-Y)-Komponenten der PAL-Farbfernsehsignale vereinfacht den hardwaremäßigen Aufbau des Digitalfilters daher beträchtlich. Von besonderem Vorteil ist außerdem, daß - im Gegensatz zu den bekannten Vorrichtungen zur Reduktion des Farbrauschens eines PAl-Fernsehsignals, welche zwei analoge Verzögerungsleitungen benötigen, hier nur eine einzige Verzögerungseinrichtung, z.B. ein Schieberegister, nötig ist.

Dies senkt die Herstellungskosten des Digitalfilters in einem hohen Maße.

Eine vorteilhafte Weiterbildung der Vorrichtung sieht vor, daß die Verzögerungseinrichtung des Digitalfilters in der Form von zwei gleichlangen Teilverzögerungseinrichtungen ausgeführt ist. Diese erfindungsgemäße Ausbildung der Verzögerungseinrichtung verursacht nur einen minimalen Kostenmehraufwand, erlaubt es aber, sowohl das Verfahren zur Reduktion des Farbrauschens als auch das o.g. Verfahren zur Korrektur von Wiedergabefehlern z.B. im Suchlauf, mit einer einzigen Schaltung, eben mit dieser vorteilhaften Weiterbildung der Erfindung durchzuführen. Dies ermöglicht es in besonders vorteilhafter Art und Weise, auf die beim Stand der Technik verwendete Schaltung zur "Farbkorrektur" vollkommen zu verzichten. Diese Herstellungskosten eines Videorecorders werden dadurch deutlich gesenkt.

Weiter vorteilhafte Weiterbildungen der Erfindung ergeben sich aus den Unteransprüchen.

Weitere Einzelheiten der Erfindung sind den Ausführungsbeispielen zu entnehmen, die im folgenden anhand der Zeichnungen beschrieben werden. Es zeigen:
- Figur 1: ein Blockschaltbild der Vorrichtung zur Reduktion des Farbrauschens,
- Figur 2: die Kennlinie des Limiters, und
- Figur 3: ein bevorzugtes Ausführungsbeispiel der Vorrichtung.

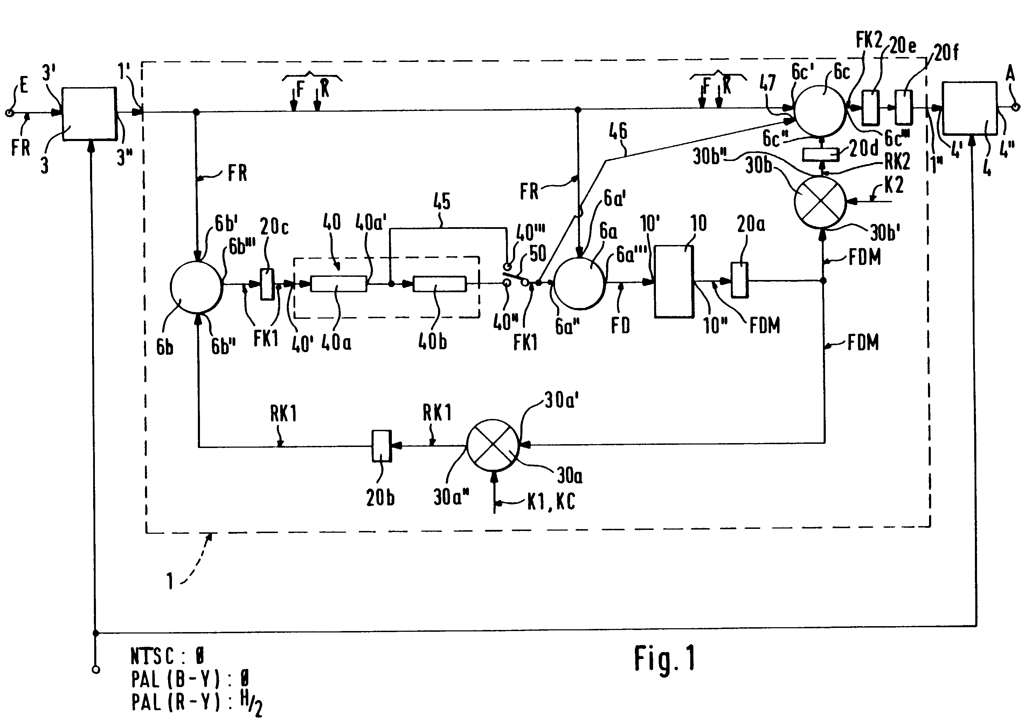

Das Verfahren zur Reduktion des Farbrauschens sowie der prinzipielle Aufbau der dazu verwendeten Vorrichtung werden anhand des in Fig. 1 dargestellten Blockschaltbildes beschrieben. Dieses zeigt ein vertikales Digitalfilter 1 sowie einen ersten und einen zweiten schaltbaren Invertierer 3 und 4, die dem Digitalfilter 1 vor- bzw. nachgeschaltet sind. An einem Eingang E der Vorrichtung liegt das zu verarbeitende Chrominanzsignal FR einer Zeile eines Fernsehbildes an. Dieses besteht im wesentlichen aus einem die Farbinformation beinhaltenden Farbanteil F und aus einem dem Farbanteil F überlagerten, eine stochastische Spektralverteilung aufweisenden (Farb-)Rauschanteil R. Das am Eingang E anliegende Chrominanzsignal FR wurde vorher bereis von einem nicht gezeigten Analog/Digital-Wandler digitalisiert und mit einem nicht gezeigten Kammfilter aus dem aus Luminanzsignal Y und Chrominanzsignal FR bestehenden Farbfernsehsignal separiert. In einem nicht gezeigten Demodulator wurde das die (R-Y)-Komponente und eine (B-Y)-Komponente in Quadraturmodulation enthaltende Chrominanzsignal FR demoduliert und in das Basisband herabgemischt.

Wichtig ist, daß bei der Digitalisierung des analogen Farbsignals und zur Demodulation der (R-Y)-Komponente und der (B-Y)-Komponente des Chrominanzsignals FR in eine digitale Signalfolge eine Abtastfrequenz verwendet wurde, die mindestens das achtfache der Nyquist-Frequenz beträgt. In der Praxis wird diese Digitalisierung mit einer für alle Fernsehstandards gleichen Abtastfrequenz durchgeführt, die um einiges größer ist als die Bandbreite der (R-Y)- und (B-Y)-Basisbandsignale (ca. 1 MHz). Durch diese Überabtastung wird erreicht, daß jede der beiden Komponenten des Chrominanzsignals FR eines Bildpunktes des Fernsehbildes in eine Folge von 1296 Teilsignalen aufgespaltet wird. Aus je acht Teilsignalen der (R-Y)-Komponente und der (B-Y)-Komponente des Chrominanzsignals FR eines jeden Bildpunktes des Fernsehbildes wird eine Digitalsignal-Gruppe gebildet. Diese Gruppierung des derart digitalisierten Chrominanzsignals FR eines jeden Bildpunktes des Fernsehbildes ermöglicht es, die zeitlich synchron auftretenden (R-Y)- und (B-Y)-Komponenten des Basisbandes zeitlich gestaffelt zu verarbeiten, indem nur je ein Teilsignal der (R-Y)- und der (B-Y)-Komponente einer jeden Digitalsignal-Gruppe zur vertikalen Rauschreduktion des durch die Teilsignale dieser Digitalsignal-Gruppe festgelegten Segments oder Bildpunktes verwendet werden. Diese dadurch entstehende Unterabtastung dieses Segments ist aufgrund der Digitalisierung der Signale mit der oben geforderten achtfachen Nyquistfrequenz erlaubt. Der Vorrichtung wird also eine Vielzahl von sequentiell aufeinanderfolgenden, unterabgetasteten Digitalsignal-Gruppen zugeführt, wobei jede dieser Gruppen seriell im Zeitmultiplex vier Teilsignale der (R-Y)-Komponente und daran anschließend vier Teilsignale der (B-Y)-Komponente enthält. Die Abtastrate des effektiven Farbtaktes gegenüber dem Systemtakt beträgt also ein Achtel, obgleich die Signalverarbeitung im Systemtakt erfolgt. Dies ermöglicht eine Mehrfachausnutzung einiger Funktionseinheiten.

In der folgenden Beschreibung wird - der einfacheren Notation halber - zwischen einem Teilsignal einer Digitalsignal-Gruppe und dem aus der Gesamtheit der Teilsignale bestehenden Chrominanzsignal der Zeile nicht unterschieden. Dies beeinflußt die Allgemeinheit der folgenden Überlegungen in keinster Weise, da das beschriebene Verfahren nur von der vertikalen Korrelation vertikal aufeinanderfolgender Zeilen abhängt. Die horizontale Korrelation aufeinanderfolgender Digitalsignal-Gruppen bzw. aufeinanderfolgender Teilsignale ist hierbei unwesentlich.

Dem Fachmann ist es also klar ersichtlich, daß in der nachfolgenden Beschreibung der rekursiven und der transversalen Signalverarbeitungsoperationen mit dem Begriff "Chrominanzsignal einer Zeile" die sequentielle Verarbeitung aller unterabgetasteten Digitalsignal-Gruppen einer Zeile zu verstehen ist. Dementsprechend ist unter einer vertikalen Korrelation der Chrominanzsignale die vertikale Korrelation einander entsprechender Digitalsignal-Gruppen zu verstehen.

Die Reduktion des Farbrauschens des Chrominanzsignals FR einer jeden Zeile des Fernsehbildes erfolgt nun jeweils in acht Takten eines die digitale Signalverarbeitung des Chrominanzzweiges des Fernsehempfängers steuernden Systemtaktes:

### 1. Takt

Das Chrominanzsignal FR wird zu einem Eingang 3' eines ersten Invertierers 3 geleitet. Dieser erste Invertierer 3 wird nur bei den (R-Y)-Komponenten eines der PAL(=Phase Alternating Line)- Norm entsprechenden Farbfernsehsignals in Funktion gesetzt.

In diesem Fall invertiert der erste Invertierer 3 die Phasenlage der (R-Y)-Komponente einer jeden zweiten Zeile der vertikal aufeinanderfolgenden Zeilen eines Fernsehbildes.

Diese Maßnahme besitzt den Vorteil, daß das dem ersten Invertierer 3 nachgeschaltete Digitalfilter 1 unabhängig von der Norm der zu verarbeitetenden Fernsehsignale ausgelegt werden kann: Die im ersten Invertierer 3 vollzogene Korrektur der zeilenweise alternierenden (R-Y)-Komponenten der PAL-Farbfernsehsignale vereinfacht den hardwaremäßigen Aufbau der Vorrichtung beträchtlich. Von besonderem Vorteil hierbei ist, daß - im Gegensatz zu den bekannten Vorrichtungen zur Reduktion des Farbrauschens bei PAL-Fernsehsignalen, welche zwei Verzögerungsleitungen benötigen - die hier beschriebene Vorrichtung nur eine einzige Verzögerungseinrichtung benötigt, in der hintereinander gestaffelt die (R-Y)- und (B-Y)-Komponenten alternierend mit dem Systemtakt abgespeichert werden.

Die nicht alternierende (B-Y)-Komponente eines PAL-Farbfernsehsignals wird vom ersten Invertierer 3 stets unverändert -d.h. ohne Inversion der Phasenlagedurchgeschaltet. Das gleiche gilt für die - nicht alternierenden - (R-Y)- und (B-Y)-Komponenten eines NTSC-Farbfernsehsignals.

Die von einem Ausgang 3'' des ersten Invertierers 3 zum Eingang 1' des Digitalfilters geleitete (R-Y)-Komponente des Chrominanzsignals FR wird zu einem Minuend-Eingang 6a' eines ersten Subtrahierers 6a geleitet. Am Subtrahend-Eingang 6a'' des ersten Subtrahierers 6a liegt ein rauschreduziertes Referenz-Chrominanzsignal FK1 an, das - wie weiter unten im einzelnen beschrieben wird - durch rekursive Signalverarbeitungsoperationen aus den Chrominanzsignalen einer oder mehrerer vertikal vorausgehender Zeilen gewonnen wurde.

Im ersten Subtrahierer 6a wird aus der (R-Y)-Komponente des Chrominanzsignal FR und aus der über mehrere vertikal vorangehende Zeilen hinweg gemittelten und dadurch rauschreduzierten Referenz-Chrominanzsignals FK1 eine (R-Y)-Komponente des Differenzsignal FD gebildet. Dieses Differenzsignal FD repräsentiert die Änderung des Zeileninhalts zwischen vertikal aufeinanderfolgenden Zeilen: Sind der Farbanteil F des Chrominanzsignals FR und die Farbanteile der dieser Zeile der vertikal vorangehenden Zeilen gut korreliert, d.h., im Fernsehbild treten zwischen diesen Zeilen keine großen Farbsprünge auf, so wird das Differenzsignal FD im wesentlichen durch den zu eliminierenden Rauschanteil R der Zeile bestimmt.

Sind dagegen die Chrominanzsignale vertikal aufeinanderfolgender Zeilen nicht entsprechend korreliert (unkorreliert), d.h. im Fernsehbild treten Farbsprünge zwischen diesen Zeilen auf, so enthält das Differenzsignal FD außer dem Rauschanteil R auch noch weitere hochfrequente Anteile mit großer Signalamplitude, welche aus diesem Farbsprung resultieren. Ein derartiges Differenzsignal FD darf jedoch nicht in die rekursive Filterung eingehen, da ansonsten eine Verschleifung von Farbsprüngen auftritt. Dieser als "colour hanging" bekannte Effekt führt ansonsten in besonders nachteiliger Art und Weise zu einer Verschlechterung der Farbtreue des Fernsehbildes.

Zur Vermeidung dieser Verschleifung von Farbsprüngen ist es deshalb besonders wichtig, daß dem ersten Subtrahierer 6a ein Limiter 10 nachgeschaltet ist, in dem das Differenzsignal FD wie folgt verarbeitet wird: Bei einem niederfrequenten und eine kleine Amplitude aufweisenden Differenzsignal FD - also bei gut korrelierten Chrominanzsignalen vertikal aufeinanderfolgender Zeilen - läßt der Limiter 10 das Differenzsignal FD unverändert durch. Liegt hingegen an dem mit einem Ausgang 6a''' des ersten Subtrahierers 6 verbundenen Eingang 10' des Limiters 10 ein unkorrelierte Chrominanzsignale repräsentierendes und daher hochfrequentes und eine große Amplitude aufweisendes Differenzsignal FD an, so erfolgt eine Dämpfung oder völligen Unterdrückung dieses Signals.

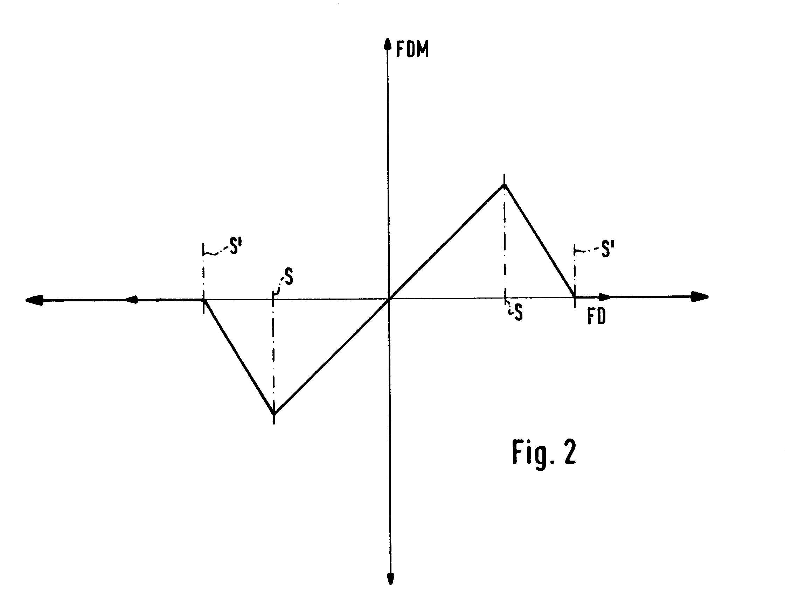

In Fig. 2 ist die Kennlinie einer bevorzugten Übertragungsfunktion des Limiters 10 dargestellt. Auf der Abszisse des in Fig. 2 dargestellten zweidimensionalen Übertragungsdiagramms ist die Amplitude des am Eingang 10' des Limiters 10 anliegenden Differenzsignals FD aufgetragen. Der Ordinate ist die Amplitude eines am Ausgang 10'' des Limiters 10 auftretenden modifizierten Differenzsignals FDM zu entnehmen. Man erkennt, daß der Limiter 10 bei kleinen Absolutbeträgen des Differenzsignals FD eine proportionale Übertragungscharakteristik aufweist: Die Amplitude des am Ausgang 10'' des Limiters 10 auftretenden modifizierten Differenzsignals FDM ist gleich der Amplitude des Differenzsignals FD.

Überschreitet der Absolutbetrag der Amplitude des Differenzsignals FD einen Schwellenwert S, so erfolgt eine Dämpfung des am Eingang 10' anliegenden Differenzsignals FD: Die Amplitude des am Ausgang 10'' des Limiters 10 auftretenden modifizierten Differenzsignals FDM nimmt ab dem Schwellwert S stetig (z.B. linear) ab und strebt dem Wert "0" zu, der bei dem oberen Schwellenwert S' erreicht wird.

Das in Fig. 2 dargestellte Amplitudenverhalten der Übertragungsfunktion des Limiters 10 besitzt nur beispielhaften Charakter. Es ist für den Fachmann ersichtlich, wie er die Übertragungsfunktion des Limiters 10 und damit die erzielbare Modifikation des Differenzsignals FD festzulegen hat, so daß das für den jeweiligen Einsatzzweck am besten geeignete Übertragungsverhalten erreicht werden kann.

Wesentlich ist nur, daß der Limiter 10 bei kleinen Amplituden des Differenzsignals FD - also bei gut korrelierten Chrominanzsignalen vertikal aufeinanderfolgender Zeilen - dieses im wesentlichen unverändert passieren läßt, und daß bei einem unkorrelierte Chrominanzsignale vertikal aufeinanderfolgender Zeilen repäsentierenden Differenzsignal FD mit großer Amplitude eine Dämpfung desselben erfolgt, wobei oberhalb eines oberen Schwellenwertes S' das Differanzsignal völlig unterdrückt wird.

Wie wiederum aus Fig. 1 ersichtlich ist, wird das modifizierte Differenzsignal FDM in einem ersten Register 20a abgespeichert.

### 2. Takt

### Rekursive Signalverarbeitung:

Das modifizierte Differenzsignal FDM wird aus dem ersten Register 20a ausgelesen und zu einem Eingang 30a' eines ersten Multiplizierer 30a geleitet. In diesem wird das modifizierte Differenzsignal FDM mit einem ersten Korrekturfaktor K1 multipliziert. Die Festlegung des ersten Korrekturfaktors K1 wird im Anschluß an die Beschreibung des 4. Taktes noch näher erläutert. Das derart gewonnene erste Korrektursignal RK1 wird in einem mit einem Ausgang 30a'' des ersten Multiplizierers 30a verbundenen zweiten Register 20b abgespeichert.

Gleichzeitig zu der eben beschriebenen Signalverarbeitung findet im zweiten Takt nochmals die oben beschriebene Signalverarbeitung des ersten Taktes statt. Die (R-Y)-Komponente des Chrominanzsignals der zu verarbeitenden Zeile und das rauschreduzierte Referenz-Chrominanzsignal FK1 werden - wie oben beschrieben - subtrahiert. Dies dient dazu, um das erste Register 20a erneut mit einem modifizierten Differenzsignal FDM zu laden. Diese erneute Ableitung dieses Differenzsignals kann jedoch entfallen, wenn das erste Register 20a als sogenanntes mehrfach-auslesbares Register ausgebildet ist, welches seinen Speicherinhalt über die am Beginn des zweiten Taktes durchgeführte Abfrage hinaus beibehält.

### 3. Takt

### Rekursive Signalverarbeitung:

Das erste Korrektursignal RK1 wird aus dem zweiten Register 20b ausgelesen und zu einem Subtrahend-Eingang 6b'' eines zweiten Subtrahierers 6b geleitet. Am Minuend-Eingang 6b' des zweiten Subtrahierers 6b liegt die (R-Y)-Komponente des Chrominanzsignal FR an.

Im zweiten Subtrahierer 6b wird durch die Subtraktion des ersten Korrektursignals RK1 von der (R-Y)-Komponente des Chrominanzsignals FR das um den ersten Korrekturfaktor K1 rauschreduziertes Referenz-Chrominanzsignal FK1 gebildet. Dieses wird in einem mit einem Ausgang 6b''' des zweiten Subtrahierers 6b verbundenen dritten Register 20c gespeichert.

Bei einem Farbsprung in verikaler Richtung, also bei einem großen Differenzsignal FD, das den Limiter 10 nicht passiert, nimmt das rauschreduzierte Referenz-Chrominanzsignal FK1 nach dem zweiten Subtrahierer 6b somit sofort den Wert des neuen Chrominanzsignals FR an. Die störende Verschleifung von vertikalen Farbsprüngen wird dadurch auf einfache Weise vermieden.

### Transversale Signalverarbeitung:

Gleichzeitig zu den Operationen der rekursiven Signalverarbeitung wird das modifizierte Differenzsignal FDM aus dem ersten Register 20a zu einem Eingang 30b' eines zweiten Multiplizierer 30b geleitet. In diesem wird das modifizierte Differenzsignal FDM mit einem zweiten Korrekturfaktor K2 multipliziert. Der zweite Korrekturfaktor K2 wird - wie im Anschluß an den 4. Takt noch beschrieben wird - in bekannter Art und Weise festgelegt. Das derart gebildete zweite Korrektursignal RK2 wird in einem mit einem Ausgang 30b'' des zweiten Multiplizierers 30b verbundenen vierten Register 20d abgespeichert.

### 4. Takt

### Rekursive Signalverarbeitung:

Das rauschreduzierte Referenz-Chrominanzsignal FK1 wird aus dem dritten Register 20c ausgelesen und zum Eingang 40' einer Verzögerungsleitung 40 geleitet. Die Länge der aus zwei Teilverzögerungsleitungen 40a und 40b bestehenden Verzögerungsleitung 40 ist dabei derart festgelegt, daß das rauschreduzierte Chrominanzsignal FK1 an ihrem Ausgang 40'' zu dem Zeitpunkt anliegt, in dem die (R-Y)-Komponente des Chrominanzsignals FR der vertikal folgenden Zeile an den Minuend-Eingang 6a' des ersten Subtrahierers 6a gelangt: In dem hier beschriebenen Fall beträgt die Verzögerungszeit also genau die Dauer einer Zeile.

Die Zweiteilung der Verzögerungsleitung 40 in zwei gleichlange Teilverzögerungsleitungen 40a und 40b sowie die Funktion der Signalleitungen 45 und 46 und des Schalters 50 ist für das Verständnis des Verfahrens zur Rauschreduktion nicht von Bedeutung. Diese Komponenten des Digitalfilters 1 werden nur bei dem weiter unten beschriebenen Verfahren zur "Farbkorrektur" benötigt, weshalb zur Erläuterung ihrer Funktion auf diese Stelle verwiesen wird. Zur Rauschreduktion ist diese Zweiteilung der Verzögerungsleitung 40 nicht erforderlich.

### Transversale Signalverarbeitung:

Gleichzeitig mit dem Abspeichern des rauschreduzierten Referenz-Chrominanzsignals FK1 wird das zweite Korrektursignal RK2 aus dem Register 20d ausgelesen und zu einem Subtrahend-Eingang 6c'' eines dritten Subtrahierers 6c geleitet. An einem Minuend-Eingang 6c' des dritten Subtrahierers 6c liegt die (R-Y)-Komponente des Chrominanzsignals FR an. Im dritten Subtrahierer 6c wird durch die Subtraktion dieser beiden Signale der Rauschanteil R der (R-Y)-Komponente des Chrominanzsignals FR der Zeile - entsprechend dem zweiten Korrektursignals RK2 - reduziert bzw. vollständig eliminiert. Die rauschreduzierte (R-Y)-Komponente des derart gebildeten rauschreduzierten Chrominanzsignals FK2 wird in einem mit dem Ausgang 6c''' des dritten Subtrahierers 6c verbundenen fünften Register 20e abgespeichert.

Der Einfluß des ersten und des zweiten Korrekturfaktors K1 und K2 auf das Verfahren zur Reduktion des Farbrauschens eines Chrominanzsignals ist für den Fachmann aus der obigen Beschreibung klar ersichtlich: Der dem ersten Multiplizierer 30a zugeordnete Korrekturfaktor K1 bestimmt die Zeitkonstante des rekursiven Zweiges des Digitalfilters 1 und damit die Anzahl der Zeilen, welche zur Bildung des rauschreduzierten Referenz-Chrominanzsignals FK1 herangezogen werden.

Der dem zweiten Multipizierer 30b zugeordnete zweite Korrekturfaktor K2 bestimmt die Reduktion des Farbrauschanteils im transversalen Zweig der Signalverarbeitung des Digitalfilters 1 und damit die Rauschreduktion im eigentlichen Ausgangssignal.

### 5. Takt

### Transversale Signalverarbeitung:

Im fünften Takt der Signalverarbeitung wird die rauschreduzierte (R-Y)-Komponente von dem fünften Register 20e zu einem sechsten Register 20f geleitet.

Gleichzeitig wird die am Eingang E liegende (B-Y)-Komponente des Chrominanzsignals FR analog wie die (R-Y)-Komponente verarbeitet: Die im fünften Takt erfolgende Signalverarbeitung der (B-Y)-Komponente ist mit der Signalverarbeitung der (R-Y)-Komponente des ersten Takts identisch.

### 6.-8. Takt

### Transversale Signalverarbeitung:

Die rauschreduzierte (R-Y)-Komponente des Chrominanzsignals FK2 wird im sechsten Takt der Signalverarbeitung aus dem fünften Register 20e ausgelesen und zu dem zweiten Invertierer 4 geleitet. Dieser dient dazu, die im ersten Invertierer 3 vollzogene Modifikation der Phasenlage einer jeden zweiten (R-Y)-Komponente eines PAL-Farbfernsehsignals wieder aufzuheben, damit am Ausgang A der Vorrichtung die rauschreduzierte (R-Y)-Komponente des rauschreduzierten Chrominanzsignals FK2 in einer der jeweiligen Farbfernseh-Norm entsprechenden Art und Weise anliegt. Die Funktionsweise des zweiten Invertierers 4 ist aus der Beschreibung der Funktion des ersten Invertierers 3 ersichtlich und braucht deshalb an dieser Stelle nicht mehr wiederholt zu werden. Am Ende des sechsten Taktes liegt die rauschreduzierte (R-Y)-Komponente des rauschreduzierten Chrominanzsignals FK2 am Ausgang A der Vorrichtung an.

### Rekursive und transversale Signalverarbeitung der (B-Y)-Komponente:

Die am Eingang E liegende (B-Y)-Komponente wird in den Takten sechs bis acht analog wie die (R-Y)-Komponente in den Takten zwei bis vier verarbeitet.

Alternativ zur Reduktion des Farbrauschens ist mit dieser Vorrichtung in besonders vorteilhafter Art und Weise ein Verfahren zur Korrektur von halbzeiligen Farbsprüngen und PAL-Phasenfehlern, welche systembedingt in einigen Betriebsarten eines Videorecorders auftreten, durchführbar.

Wie bereits in der Beschreibungseinleitung erwähnt wurde, sind bei der Aufzeichnung von Video-Signalen in den meisten Betriebsarten die Zeilen eines Halbbildes von Spur zu Spur gegeneinander versetzt auf dem Videoband. Bei einigen Wiedergabearten - z.B. beim Suchlauf - läuft der Videokopf schräg über die Spuren des Videobandes, so daß im ausgelesenen Videosignal einiger Zeilen des Fernsehbildes halbzeilige Sprünge und/oder Vorzeichenfehler der (R-Y)-Komponente auftreten. Diese müssen im Wiedergabemodus korrigiert werden, um Sprünge und Verfälschungen der Wiedergabe des Fernsehbildes zu verhindern.

Der besondere Vorteil der beschriebenen Vorrichtung besteht nun darin, daß es mit einem minimalen hardwaremäßigen Mehraufwand - nämlich den beiden Teilverzögerungseinrichtungen 40a und 40b anstelle einer Verzögerungseinrichtung 40 sowie der Signalleitungen 45, 46 und des Schalters 50 - möglich ist, die beiden Verfahren "Rauschreduktion" und "Farbkorrektur" mit Hilfe ein und derselben Schaltung durchzuführen.

Das Verfahren zur Korrektur von halbzeiligen Farbsprüngen und PAL-Phasenfehlern wird mittels der oben beschriebenen Vorrichtung wie folgt durchgeführt:

### 1. Takt

Die am Eingang E der Vorrichtung anliegende (R-Y)-Komponente des Chrominanzsiganls FR wird über den ersten Invertierer 3, den ersten Subtrahierer 6a und den Limiter 10 zum ersten Register 20a geleitet und darin abgespeichert. Hierbei ist vorgesehen, daß der erste Invertierer 3, der erste Subtrahierer 6a und der Limiter 10 außer Funktion sind, so daß die (R-Y)-Komponente unverändert durchgelassen wird.

### 2. Takt

In diesem Takt wird die (R-Y)-Komponente des Chrominanzsignals FR aus dem ersten Register 20a ausgelesen und zum ersten Multiplizierer 30a geleitet. In diesem erfolgt eine Multiplikation der (R-Y)-Komponente mit einer Konstanten KC, welche nur die Werte "+1" oder "-1" annehmen kann. Der erste Multiplizierer 30a wird stets dann mit dem erstgenannten Wert der Korrekturkonstante KC angesteuert, wenn die (R-Y)-Komponente des Chrominanzsignals FR ihre normgemäße Phasenlage besitzt. Demzufolge wird der Wert "-1" der Korrekturkonstante KC stets dann verwendet, wenn im Chrominanzsignal ein Vorzeichenfehler gegenüber der normgemäßen Abfolge vorliegt. Auf diese Art und Weise wird eine Korrektur der - eventuell aufgetretenen - Vorzeichenfehler der (R-Y)-Komponente des Farbfernsehsignals erreicht. Die derart verarbeitete (R-Y)-Komponente wird im zweiten Register 20b abgespeichert.

### 3. Takt

Die (R-Y)-Komponente des Chrominanzsignals FR wird aus dem zweiten Register 20b ausgelesen und zu dem Subtrahend-Eingang 6b'' des zweiten Subtrahierers 6b geleitet. Dieser ist außer Funktion, so daß die (R-Y)-Komponente unverändert durchgelassen und anschließend zum dritten Register 20c geleitet und darin gespeichert wird.

### 4. Takt

In diesem Takt wird ein eventuell aufgetretener halbzeiliger Versatz der (R-Y)-Komponente des Chrominanzsignals FR korrigiert. Diesem Zeck dienen die beiden Teilverzögerungseinrichtungen 40a und 40b, die Signalleitungen 45 und 46 sowie der Schalter 50. Durch ein Umlegen des Schalters 50 wird erreicht, daß das am Eingang 40' der Verzögerungseinrichtung 40 anliegende Signal nur die erste Teilverzögerungseinrichtung 40a durchläuft und dann über die mit ihrem Ausgang 40a' verbundene Signalleitung 45 zum Ausgang 40''' der Verzögerungseinrichtung 40 gelangt. Diese Schalterposition des Schalters 50 wird in all den Fällen verwendet, in denen das Chrominanzsignal FR einer Zeile des Fernsehbildes einen halbzeiligen Versatz gegenüber der normgemäßen Abfolge aufweist. Die Verzögerungszeit beträgt demgemäß nur eine halbe Zeile. Die (R-Y)-Komponente wird anschließend über die weitere Signalleitung 46 zu einem weiteren Eingang 47 des dritten Subtrahierer 6c geleitet und anschließend im fünften Register 20e gespeichert.

### 5. Takt

Die (R-Y)-Komponente des Chrominanzsignals FR wird vom fünften Register 20e zum sechsten Register 20f geleitet.

Gleichzeitig wird die (B-Y)-Komponente des Chrominanzsignals FR analog zur Signalverarbeitung der (R-Y)-Komponente des ersten Taktes verarbeitet.

### 6.-8. Takt

Im sechsten Takt wird die (R-Y)-Komponente des Chrominanzsignals FR aus dem fünften Register 20e ausgelesen, zum Ausgang 1'' des Digitalfilters 1 geführt und über den ebenfalls deaktivierten zweiten Invertierer 4 zum Ausgang A der Vorrichtung geleitet.

Die in diesen Takten erfolgende Signalverarbeitung der am Eingang E liegenden (B-Y)-Komponente erfolgt analog zur Signalverarbeitung der (R-Y)-Komponente der Takte 2 bis 4.

Zur obigen Beschreibung dieses Ausführungsbeispiels sowie zur nachfolgenden Erläuterung des bevorzugten Ausführungsbeispiels ist anzumerken, daß hierbei nur die zum Verständnis der Erfindung erforderlichen Einrichtungen und Bauelemente erläutert wurden bzw. werden. Darüber hinaus weisen die beschriebenen Vorrichtungen noch an sich bekannte Bauelemente auf, wie z.B. eine Regel- und Steuereinheit zur Steuerung der beschriebenen Umschaltvorgänge (z.B. des Schalters 50). Ferner sind noch Teilschaltungen vorhanden, welche dafür sorgen, daß die einzelnen Signale der rekursiven und der transversalen Signalverarbeitungsoperationen exakt und ausschließlich den beschriebenen Signalweg durchlaufen und daß diese Signale nicht durch andere Signale störend beeinflußt werden. Dem Fachmann ist es bekannt, welche Maßnahmen er zu ergreifen hat, um diese Forderungen hardwaremäßig oder softwaremäßig zu implementieren. Auf eine detaillierte Beschreibung kann deshalb verzichtet werden. Auch der Ersatz ganzer Funktionseinheiten durch entsprechende Softwareeinheiten ist selbstverständlich in das Belieben des Fachmanns gestellt.

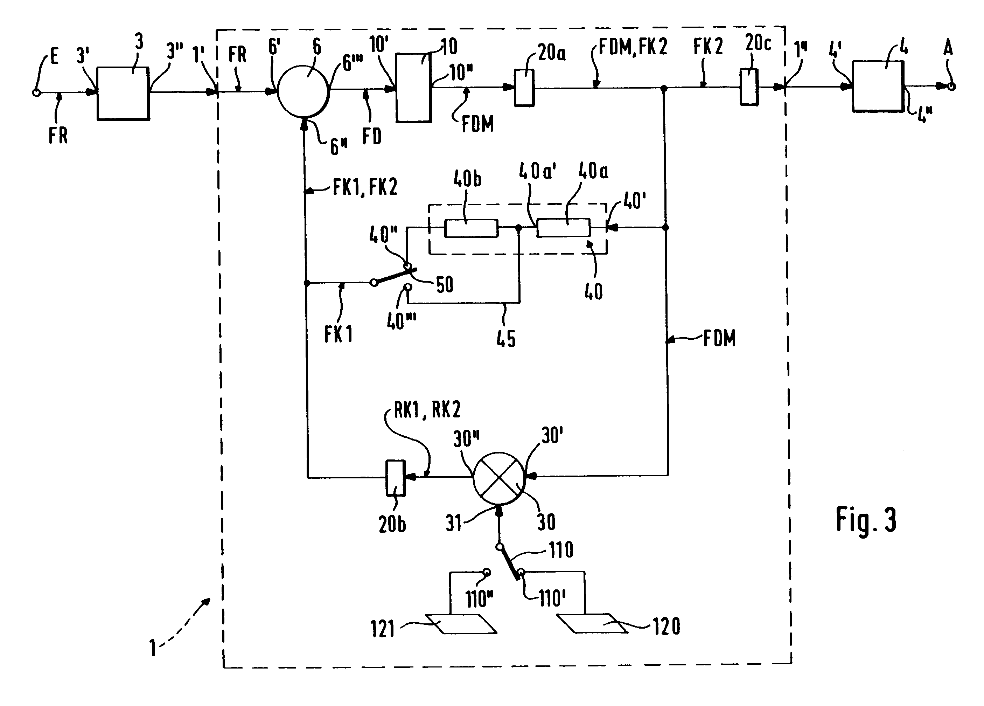

In der Fig. 3 ist ein bevorzugtes Ausführungsbeispiel der Vorrichtung zur Durchführung der beiden oben beschriebenen Verfahren dargestellt. Diese Ausführungsform der Vorrichtung zeichnet sich durch eine minimalen hardwaremäßigen Aufwand aus: Im Gegensatz zu dem in Fig. 1 dargestellten prinzipiellen Aufbau der Vorrichtung, der zwei Multiplizierer 30a und 30b, drei Subtrahierer 6a, 6b und 6c und sechs Register 20a - 20f benötigt, erlaubt es das bevorzugte Ausführungsbeispiel der Vorrichtung in besonders vorteilhafter Art und Weise, das Verfahren zur Reduktion des Farbrauschens sowie das Verfahren zur Korrektur von Farbsprüngen mit nur einem Multiplizierer 6, einem Subtrahierer 20 und drei Registern 20a, 20b und 20c durchzuführen.

Die Signalverarbeitung des bevorzugten Ausführungsbeispiel ist nun bei der Betriebsart "Farbrauschreduktion" wie folgt: Eine in der nachfolgenden Beschreibung der kürzeren und prägnanteren Erläuterung halber getroffene Annahme besteht darin, daß einige Bauelemente der Vorrichtung (Subtrahierer, Multiplizierer, Invertierer) immer dann deaktiviert sind und das an ihrem Eingang anliegende Signal unverändert zum Ausgang leiten, wenn die konkrete Funktion dieser Bauelemente nicht explizit angeführt ist. Diese Aktivierung bzw. Deaktivierung der entsprechenden Bauelemente wird wiederum von der nicht gezeigten Regel- und Steuereinrichtung gesteuert.

### 1. Takt

Die (R-Y)-Komponente wird vom Eingang E zum ersten Invertierer 3 geleitet. Dieser ist - entsprechend der Phasenlage der (R-Y)-Komponente - aktiviert oder deaktiviert. Gleichzeitig wird der Subtrahend-Eingang 6'' des Subtrahierers 6 mit der am Ausgang 40'' der Verzögerungseinrichtung 40 anliegenden rauschreduzierten (R-Y)-Komponente des Referenz-Chrominanzsignals FK1 gespeist. Nach der im Subtrahierer 6 durchgeführten Subtraktion dieser beiden Signale wird die daraus resultierende (R-Y)-Komponente des Differenzsignals FD zum Eingang 10' des Limiters 10 geleitet. Dieser ist aktiviert, so daß die oben beschriebene amplitudenabhängige Dämpfung durchgeführt wird. Anschließend wird das derart gewonnene modifizierte Differenzsignal FDM zum ersten Register 20a geleitet und dort abgespeichert.

### 2. Takt

### Rekursive Signalverarbeitung:

Das modifizierte Differenzsignal FDM wird aus dem ersten Register 20a ausgelesen und zu dem Eingang 30' des Multiplizierers 30 geleitet. Ein Multiplikator-Eingang 31 des Multiplizierers 30 ist über einen in seiner Schaltstellung 110' befindlichen Schalter 110 mit einem ersten Speicherregister 120 verbunden, in dem der erste Korrekturfaktor K1 abgespeichert ist. Nach der Multiplikation des modifizierten Farbdifferenzssignals FDM mit dem ersten Korrekturfaktor K1 wird das derart gebildete erste Korrektursignal RK1 zum zweiten Register 20b geleitet und dort abgespeichert. Wie bereits beschrieben wurde, wird gleichzeitig das modifizierte Differenzsignal FDM erneut berechnet und im ersten Register 20a abgespeichert.

### 3. Takt

### Rekursive Signalverarbeitung:

Das aus dem zweiten Register 20b ausgelesene erste Korrektursignal RK1 wird zum Subtrahend-Eingang 6'' des Subtrahierers 6 geleitet. An dessen Minuend-Eingang 6' liegt zu diesem Zeitpunkt die (R-Y)-Komponente des Chrominanzsignals FR an. Durch die Subtraktion dieser beiden Signale wird das rauschreduzierte Referenz-Chrominanzsignal FK1 gebildet, welches über den - in diesem Takt deaktivierten - Limiter 10 zum ersten Register 20a geleitet und darin abgespeichert wird.

### Transversale Signalverarbeitung:

Das im zweiten Takt erneut gebildete modifizierte Differenzsignal FDM wurde unmittelbar vorangehend aus dem Register 20a ausgelesen und wird analog wie das im ersten Takt gebildete modifizierte Differenzsignal FDM zum Multiplizierer 30 geleitet. Zu diesem Zeitpunkt ist der Multiplikatoreingang 31 über den in seiner zweiten Schaltstellung 110'' befindlichen Umschalter 110 mit dem zweiten Register 121 verbunden, in dem die zweite Korrekturkonstante K2 gespeichert ist. Das derart gebildete zweite Korrektursignal RK2 wird im zweiten Register 20b abgespeichert.

### 4. Takt

### Rekursive Signalverarbeitung:

Das rauschreduzierte Referenz-Chrominanzsignal FK1 wird aus dem ersten Register 20a ausgelesen und zum Eingang 40' der Verzögerungsrichtung 40 geleitet. Das Signal durchläuft dann die beiden Teilverzögerungsrichtungen 40a und 40b und erreicht -entsprechend der Gesamtlänge der beiden Teilverzögerungseinrichtungen 40a und 40b- nach einer Verzögerungszeit von der Dauer einer Zeile des Fernsehbildes den Ausgang 40'' der Verzögerungseinrichtung 40.

### Transversale Signalverarbeitung:

Gleichzeitig wird das modifizierte Differenzsignal FDM aus dem zweiten Register 20b ausgelesen und zum Subtrahend-Eingang 6'' des Subtrahierers 6 geleitet. An dessen Minuend-Eingang 6' liegt zu diesem Zeitpunkt die (R-Y)-Komponente an. Durch die Subtraktion dieser beiden Signale im Subtrahierer 6 wird die rauschreduzierte (R-Y)-Komponente des Chrominanzsignals FK2 gebildet. Dieses wird über den deaktivierten Limiter 10 zum ersten Register 20a geleitet und in diesem abgespeichert.

### 5. Takt

In diesem Takt liegt das erste Teilsignal der (B-Y)-Komponente des Chrominanzsignals FR der Zeile am Eingang E an. Dieses wird über den deaktivierten ersten Invertierer 3 zum Minuend-Eingang 6' des Subtrahierers 6 geleitet und analog zu der oben beschriebenen Verarbeitung der (R-Y)-Komponente des ersten Taktes verarbeitet.

### Transversale Signalverarbeitung:

Gleichzeitig hierzu wird die (R-Y)-Komponente des rauschreduzierten Chrominanzsignals FK2 der Zeile aus dem ersten Register 20a ausgelesen und zu einem dritten Register 20c geleitet und darin abgespeichert.

### 6. Takt

Die rekursive und die transversale Signalverarbeitung der (B-Y)-Komponente in diesem Takt ist analog zur Verarbeitung der (R-Y)-Komponente des oben beschriebenen zweiten Takts.

### Transversale Signalverarbeitung der (R-Y)-Komponente:

Gleichzeitig zu diesen o.g. Operationen wird die (R-Y)-Komponente des rauschreduzierten Chrominanzsignals FK2 aus dem dritten Register 20c ausgelesen und zum zweiten Invertierer 4 geleitet. Die im ersten Invertierer 3 - eventuell vollzogene (s. Takt 1) Inversion der Phasenlage der (R-Y)-Komponente des (PAL-)Chrominanzsignals FR wird entsprechend korrigiert. Das Chrominanzsignal wird zum Ausgang A der Vorrichtung geleitet.

### 7. und 8. Takt

In diesen Takten wird die (B-Y)-Komponente des Chrominanzsignals der ersten Zeile analog wie die (R-Y)-Komponente im dritten und im vierten Takt verarbeitet.

Die im bevorzugten Ausführungsbeispiel in der Betriebsart "Farbkorrektur" erfolgende Signalverarbeitung ist wie folgt:

### 1. Takt

Die am Eingang E der Vorrichtung anliegende (R-Y)-Komponente des Chrominanzsignals wird über den deaktivierten ersten Inverter 3, über den Subtrahierer 6 und über den Limiter 10 zum ersten Register 20a geleitet und darin abgespeichert.

### 2. Takt

Die (R-Y)-Komponente wird aus dem ersten Register 20a ausgelesen und zu dem Eingang 30' des Multiplizierers 30 geleitet. In den über den Schalter 110 mit dem Multiplikator-Eingang 31 des Multiplizierers 30 verbundenen ersten und zweiten Speicherregister 120 und 121 sind die beiden möglichen Werte "+1" und "-1" der Korrekturkonstanten KC gespeichert. Die (R-Y)-Komponente wird - wie bereits beim ersten Ausführungsbeispiel beschrieben - mit dem entsprechenden Wert der Korrekturkonstante KC multipliziert, um die evt. aufgetretene Inversion der Phasenlage dieser Komponente korrigieren. Nach erfolgter Multiplikation mit der Korrekturkonstanten KC wird die (R-Y)-Komponente im zweiten Register 20b abgespeichert.

### 3. Takt

Die (R-Y)-Komponente wird aus dem zweiten Register 20b ausgelesen und über den Subtrahierer 6 und dem Limiter 10 zum ersten Register 20a geleitet und darin abgespeichert.

### 4. Takt

Die aus dem ersten Register 20a ausgelesene (R-Y)-Komponente wird zum Eingang 40' der zweigeteilten Verzögerungsrichtung 40 geleitet. In diesem Takt erfolgt nun - wie bereits oben beschrieben - die Korrektur eines evt. aufgetretenden halbzeiligen Versatzes des Chrominanzsignals der zu verarbeitenden Zeile des vom Videoband gelesenen Fernsehsignals. Liegt ein derartiger halbzeiliger Versatz vor, so wird der Schalter 50 von der nicht gezeigten Steuer- und Regelungseinrichtung derart angesteuert, daß er den Ausgang 40''' der Verzögerungseinrichtung 40 abgreift. In diesem Fall durchläuft (R-Y)-Komponente des Chrominanzsignals nur die Verzögerungseinrichtung 40a und wird über die Signalleitung 45 zu dem Ausgang 40''' geleitet. Das am Ausgang 40''' anliegende Signal wird über den Subtrahierer 6 und über den Limiter 10 zum ersten Register 20a geleitet und darin abgespeichert.

### 5. Takt

Die aus dem ersten Register 20a ausgelesene (R-Y)-Komponente des Chrominanzsignals wird zum dritten Register 20c geleitet und darin abgespeichert.

Gleichzeitig dazu wird die (B-Y)-Komponente des Chrominanzsignals dieser Zeile analog zur Signalverarbeitung der (R-Y)-Komponente des ersten Taktes verarbeitet.

### 6. Takt

Die aus dem dritten Register 20c ausgelesene (R-Y)-Komponente wird über den deaktivierten Limiter 4 zum Ausgang A der Vorrichtung geleitet.

Die (B-Y)-Komponente wird analog wie im zweiten Takt verarbeitet.

### 7. und 8. Takt

Die (B-Y)-Komponente wird analog wie in den Takten 3 und 4 verarbeitet.

## Patentansprüche

1. Verfahren zur Reduktion des Farbrauschens der Chrominanzsignale eines Fernsehbildes mittels eines vertikalen Digitalfilters (1), wobei
- aus dem Chrominanzsignal (FR) einer jeden Zeile, dessen Farbanteil (F) stochastisch spektralverteilter Rauschanteil (R) überlagert ist, und aus einem aus den Chrominanzsignalen der vertikal vorangehenden Zeilen gewonnenen rauschreduzierten Referenz-Chrominanzsignal (FK1) ein Differenzsignal (FD) abgeleitet wird, dessen Frequenz und Amplitude durch den Rauschanteil (R) dieser Zeile und durch die Korrelation des Farbanteils (F) dieser Zeile mit den Farbanteilen der vertikal vorangehenden Zeilen bestimmt wird,
- die Ableitung des in die Berechnung des Differenzsignals der vertikal darauffolgenden Zeile eingehenden rauschreduzierten Referenz-Chrominanzsignals (FK1) durch rekursive Signalverarbeitungsoperationen des Digitalfilters (1) erfolgt, indem das rauschreduzierte Referenz-Chrominanzsignal aus dem mit einem ersten Korrekturfaktor (K1) bewerteten Differenzsignal (FD) (= erstes Korrektursignal (RK1)) und aus dem Chrominanzsignal (FR) dieser Zeile gebildet wird,
- die Reduktion des Rauschanteils (R) des Chrominanzsignals (FR) jeder Zeile ferner durch transversale Signalverarbeitungsoperationen erfolgt, indem durch die Subtraktion des mit einem zweiten Korrekturfaktor (K2) bewerteten Differenzsignals (FD) (= zweites Korrektursignal (RK2)) von dem Chrominanzsignal (FR) der jeweiligen Zeile ein rauschreduziertes Chrominanzsignal (FK2) gebildet wird,
dadurch gekennzeichnet, daß
- das Differenzsignal (FD) vor dem Durchlaufen der transversalen Signalverarbeitungsoperationen einem Limiter (10) des Digitalfilters (1) zugeführt wird, dessen Übertragungsfunktion derart festgelegt ist, daß bei einem unkorrelierte Chrominanzsignale vertikal aufeinanderfolgender Zeilen repräsentierenden Differenzsignal (FD) eine amplitudenabhängige Dämpfung desselben erfolgt, daß bei einem korrelierte Chrominanzsignale vertikal aufeinanderfolgender Zeilen repräsentierenden Differenzsignal (FD) dieses ungedämpft übertragen wird und daß das derart gewonnene modifizierte Differenzsignal (FDM) in die rekursiven und in die transversalen Signalverarbeitungsoperationen eingeht,
- das Chrominanzsignal (FR) in seine (R-Y)- und (B-Y)-Komponenten zerlegt und in das Basisband transformiert wird, um aus dem derart digitalisierten Chrominanzsignal (FR) einer jeden Zeile eine oder mehrere sequentiell aufeinanderfolgende Digitalsignal-Gruppen zu bilden, die im Zeitmultiplex als Teilsignale die (R-Y) und (B-Y)-Komponenten des Chrominanzsignals (FR) enthalten und je Teilsignal dem Digitalfilter (1) alternierend zugeführt werden,
- das modifizierte Differenzsignal (FDM) anstelle des ursprünglichen Differenzsignals (FD) in die rekursiven und in die transversalen Signalverarbeitungsoperationen eingeht,
- bei den eine zeilenweise alternierende (R-Y)-Komponente aufweisenden Chrominanzsignalen von PAL-Farbfernsehsignalen vor der Durchführung der vertikalen Filterung eine Inversion der Phasenlage der (R-Y)-Komponente einer jeden zweiten Zeile erfolgt und
- diese Modifikation der Phasenlage bei der (R-Y)-Komponente des rauschreduzierten Chrominanzsignals (FK2) am Ausgang des Digitalfilters (1) durch eine erneute Inversion aufgehoben wird.

2. Verfahren nach Anspruch 1, dadurch gekennzeichnet, daß das rauschreduzierte Referenz-Chrominanzsignal (FK1) der (R-Y)-Komponente bzw. der (B-Y)-Komponente über eine Verzögerungseinrichtung (40) des Digitalfilters (1) geleitet wird, deren Länge derart bestimmt ist, daß das rauschreduzierte Referenz-Chrominanzsignal (FK1) an einem mit einem Ausgang (40") der Verzögerungseinrichtung (40) verbundenen Subtrahend-Eingang (6"; 6a") eines Subtrahierers (6; 6a) des Digitalfilters (1) zu dem Zeitpunkt anliegt, an dem die entsprechende (R-Y)-Komponente bzw. der (B-Y)-Komponente des Chrominanzsignals der vertikal folgenden Zeile am Minuend-Eingang (6'; 6a') des Subtrahierers (6; 6a) auftritt.

## Claims

1. A method of reducing the color noise of the chrominance signals of a television picture by means of a vertical digital filter (1) wherein
- from the chrominance signal (FR) of each line, on whose color component (F) a noise component (R) having a stochastic spectral distribution is superimposed, and from a noise-reduced reference chrominance signal (FK1) formed from the chrominance signals of the vertically preceding lines, a difference signal (FD) is derived whose frequency and amplitude are determined by the noise component (R) of said line and by the correlation of the color component (F) of said line with the color components of the vertically preceding lines,
- the derivation of the noise-reduced reference chrominance signal (FK1), which enters into the calculation of the difference signal of the vertically succeeding line, is effected by recursive signal-processing operations of the digitial filter (1) whereby the noise-reduced reference chrominance signal is formed from the difference signal (FD) weighted with a first correction factor (K1) (= first correction signal (RK1)) and the chrominance signal (FR) of said line,
- the reduction of the noise component (R) of the chrominance signal (FR) of each line is effected by transversal signal-processing operations whereby a noise-reduced chrominance signal (FK2) is formed by subtracting the difference signal (FD) weighted with a second correction factor (K2) (= second correction signal (RK2)) from the chrominance signal (FR) of the respective line,
characterized in
- that the difference signal (FD), before being subjected to the recursive and transversal signal-processing operations, is applied to a limiter (10) of the digital filter (1) whose transfer function is such that in the presence of a difference signal (FD) representative of uncorrelated chrominance signals of vertically successive lines, an amplitude-dependent attenuation of the same is introduced, that a difference signal (FD) representative of correlated chrominance signals of vertically successive lines is transmitted unattenuated, and that the modified difference signal (FDM) thus obtained enters into the recursive and transversal signal-processing operations,
- that the chrominance signal (FR) is split into its R-Y and B-Y components and transformed into the baseband to form from the resulting digitized chrominance signal (FR) of each line one or more sequential digital-signal groups which contain the R-Y and B-Y components of the chrominance signal (FR) as time-division-multiplexed component signals and which are fed to the digital filter (1) alternately per component signal,
- that the modified difference signal (FDM) enters into the recursive and transversal signal-processing operations instead of the original difference signal (FD),
- that in the case of the chrominance signals of PAL color-television signals, where the phase of the R-Y component is reversed on alternate lines, inversion of the phase of the R-Y component of every other line takes place before the vertical filtering is performed, and
- that in the case of the R-Y component of the noise-reduced chrominance signal (FK2), this modification of the phase is cancelled at the output of the digital filter (1) by another inversion.

2. A method as claimed in claim 1, characterized in that the noise-reduced reference chrominance signal (FK1) of the R-Y component or B-Y component is passed through a delay device (40) of the digital filter (1) having an output (40") coupled to a subtrahend input (6"; 6a") of a subtracter (6; 6a) of the digital filter (1), the length of the delay device (40) being chosen so that the noise-reduced reference chrominance signal (FK1) appears at the subtrahend input (6"; 6a") of the subtracter (6; 6a) of the digital filter (1) at the instant the corresponding R-Y or B-Y component of the chrominance signal of the vertically succeeding line appears at the minuend input (6'; 6a') of the subtracter (6; 6a).

## Revendications

1. Procédé pour réduire le bruit de couleur des signaux de chrominance d'une image de télévision à l'aide d'un filtre numérique vertical (1), selon lequel
- à partir du signal de chrominance (FR) de chaque ligne, à la composante de couleur (F) duquel est superposée de façon aléatoire une composante de bruit (R) à distribution spectrale, et à partir d'un signal de chrominance de référence (FK1) dont le bruit est réduit et qui est obtenu à partir des signaux de chrominance de la ligne précédente dans le sens vertical, on obtient un signal de différence (FD), dont la fréquence et l'amplitude sont déterminées par la composante de bruit (R) de cette ligne et par la corrélation de la composante de couleur (F) de cette ligne avec les composantes de couleur des lignes précédentes dans le sens vertical,
- le signal de chrominance de référence (FK1), dont le bruit est réduit et qui intervient dans le calcul du signal de différence de la ligne suivante dans le sens vertical, est obtenu au moyen d'opérations récursives de traitement du signal du filtre numérique (1), par le fait que le signal de chrominance de référence, dont le bruit est réduit, est formé à partir d'un signal de différence (FD) pondéré avec le premier facteur de correction (K1) (= premier signal de correction (RK1)) et à partir du signal de chrominance (FR) de cette ligne,
- la réduction de la composante de bruit (R) du signal de chrominance (FR) de chaque ligne est en outre obtenue au moyen d'opérations transversales de traitement du signal, par le fait qu'un signal de chrominance (FK2), dont le bruit est réduit, est formé par soustraction du signal de différence (FD) pondéré par un second facteur de correction (K2) (= second signal de correction (RK2)), du signal de chrominance (FR) de la ligne respective,
caractérisé en ce que
- le signal de différence (FD) est envoyé, avant de subir les opérations transversales de traitement du signal, à un limiteur (10) du filtre numérique (1), dont la fonction de transfert est fixée de telle sorte que, pour un signal de référence (FD) représentant des signaux de chrominance non corrélés de lignes verticales successives dans le sens vertical, ce signal de différence est soumis à un affaiblissement qui dépend de l'amplitude, que dans le cas d'un signal de différence (FD) représentant des signaux de chrominance corrélés de lignes successives dans le sens vertical, ce signal de différence est transmis sans être affaibli et que le signal de différence modifié (FDM), obtenu de cette manière, est soumis aux opérations récursives de traitement du signal et à des opérations transversales de traitement du signal,
- le signal de chrominance (FR) est subdivisé en ses composantes (R-Y) et (B-Y) et est amené par transformation dans la bande de base, pour former, à partir du signal de chrominance numérisé de cette manière (FR) de chaque ligne, un ou plusieurs groupes de signaux numériques, qui se succèdent séquentiellement et qui contiennent en tant que signaux partiels, dans le multiplexage temporel, des composantes (R-Y) et (B-Y) du signal de chrominance (FR) et sont envoyés alternativement, pour chaque signal partiel, au filtre numérique (1),
- le signal de différence modifié (FDM) est utilisé, à la place du signal de différence originel (FD), dans les opérations récursives de traitement du signal et dans les opérations transversales de traitement du signal,
- dans le cas des signaux de chrominance, qui possèdent une composante (R-Y) qui alterne d'une ligne à l'autre, de signaux de télévision en couleurs PAL, une inversion de la phase de la composante (R-Y) de chaque seconde ligne est exécutée avant la mise en oeuvre du filtrage vertical, et
- cette modification de la position de phase est supprimée au moyen d'une nouvelle inversion à la sortie du filtre numérique (1) pour la composante (R-Y) du signal de chrominance (FK2) dont le bruit est réduit.

2. Procédé selon la revendication 1, caractérisé en ce que le signal de chrominance de référence (FK1), dont le bruit est réduit, de la composante (R-Y) ou de la composante (B-Y) est retransmis par l'intermédiaire d'un dispositif de retardement (40) du filtre numérique (1), la longueur de ce dispositif de retardement étant déterminée de telle sorte que le signal de chrominance de référence (FK1), dont le bruit est réduit, est appliqué à une entrée du nombre à soustraire (6"; 6a"), qui est reliée à une sortie (40") du dispositif de retardement (40), d'un soustracteur (6;6a) du filtre numérique (1) à un instant auquel la composante (R-Y) correspondante ou la composante (B-Y) du signal de chrominance de la ligne suivante dans le sens vertical apparaît à l'entrée du minuende (6';6a') du soustracteur (6;6a).
